(19) Europäisches Patentamt
European Patent Office
Office européen des brevets

(11) **EP 1 976 601 B1**

(12) **EUROPÄISCHE PATENTSCHRIFT**

(45) Veröffentlichungstag und Bekanntmachung des Hinweises auf die Patenterteilung:
**23.06.2010 Patentblatt 2010/25**

(21) Anmeldenummer: **07818657.4**

(22) Anmeldetag: **02.10.2007**

(51) Int Cl.:
*A63B 43/00* (2006.01)        *A63B 71/06* (2006.01)

(86) Internationale Anmeldenummer:
**PCT/EP2007/008577**

(87) Internationale Veröffentlichungsnummer:
**WO 2008/043465 (17.04.2008 Gazette 2008/16)**

(54) **KONZEPT ZUR AKTIVIERUNG EINES SPIELGERÄTS**

CONCEPT FOR ACTIVATING A PLAYING DEVICE

CONCEPT LIÉ À L'ACTIVATION D'UN ARTICLE DE JEU

(84) Benannte Vertragsstaaten:
**DE ES FR GB IT**

(30) Priorität: **12.10.2006 DE 102006048387**
**16.04.2007 DE 102007017549**

(43) Veröffentlichungstag der Anmeldung:
**08.10.2008 Patentblatt 2008/41**

(73) Patentinhaber: **Cairos Technologies AG**
**76307 Karlsbad (DE)**

(72) Erfinder:
• **ENGLERT, Walter**
**88483 Burgrieden (DE)**

• **BUCHER, Tilman**
**81929 München (DE)**

(74) Vertreter: **Grünecker, Kinkeldey,**
**Stockmair & Schwanhäusser**
**Anwaltssozietät**
**Leopoldstrasse 4**
**80802 München (DE)**

(56) Entgegenhaltungen:
WO-A-00/47291        WO-A-2004/076003
WO-A-2006/094508     DE-A1- 2 732 543
US-A- 6 151 563      US-A1- 2005 159 252

**EP 1 976 601 B1**

**Beschreibung**

Die vorliegende Erfindung bezieht sich auf ein Konzept zur Aktivierung eines Spielgeräts, wie es insbesondere zur Aktivierung eines Fußballs bei einem Fußballspiel eingesetzt werden kann.

Eine Vielzahl von Aufgaben, wie beispielsweise eine Ballortung bei einem Fußballspiel, setzt eine Kenntnis von Positionen und/oder Orientierung von Objekten voraus. Bei einem Fußballspiel ist eines der umstrittensten Themen, ob in kritischen Situationen ein Ball die Torlinie überschritten hat oder nicht. Hierzu ist es notwendig, dass die Position des Balls an der Torlinie mit einer Genauigkeit von ca. ± 1,5 cm gemessen werden kann.

Eine Positionsbestimmung bzw. Ballortung kann beispielsweise mittels Magnetfeldern erfolgen, welche in der Nähe des Torraums beispielsweise mittels Spulen an und/oder in den Torpfosten erzeugt werden können. Verfügt ein Spielgerät bzw. ein Ball über einen Magnetfeldsensor, so kann über die Ermittlung der Feldstärken der von den Spulen erzeugten Magnetfelder beispielsweise eine Aussage darüber getroffen werden, ob der Ball die Torlinie überschritten hat oder nicht.

Da in einem Fußballspiel ein Fußball Geschwindigkeiten bis zu 140 km/h erreichen kann, sollte für eine Positionsmessung zur Torentscheidung, insbesondere in der Nähe des Tores, eine Position des Balls sehr genau bestimmt werden können. Dies erfordert beispielsweise eine Aktivierung einer hohen Abtastrate eines Lesers zum Auslesen des Magnetfeldsensors für eine detaillierte und exakte Messung des Magnetfeldes im Torraum.

Im Stand der Technik wurde bereits vorgeschlagen, einen in einem Ball zur Messung des Erdmagnetfeldes vorgesehenen Sensor zu aktivieren, wenn mittels zweier mechanischer Erdbeschleunigungsschalter (g-force switch) eine Balldrehung detektiert wird (US 6,151,563). Dieses Verfahren ermöglicht jedoch nicht eine Aktivierung einer hohen Abtastrate eines Lesers zum Auslesen eines Magnetfeldsensors für eine detaillierte und exakte Messung eines Magnetfeldes im Torraum.

Die Aufgabe der vorliegenden Erfindung besteht daher darin, ein einfaches und funktionales Konzept zur Aktivierung einer hohen Abtastrate eines Lesers zum Auslesen eines Magnetfeldsensors für eine detaillierte und exakte Messung eines Magnetfeldes im Torraum bereitzustellen.

Diese Aufgabe wird durch die Gegenstände der unabhängigen Patentansprüche gelöst.

Bevorzugte Ausführungsformen sind Gegenstand der abhängigen Ansprüche.

Die Erkenntnis der vorliegenden Erfindung besteht darin, dass eine Elektronik in einem Spielgerät bzw. in einem Spielball in der Nähe eines Tors bzw. in einem Torraum durch ein Aktivierungssignal in dem Torraum aktiviert wird, um daraufhin beispielsweise eine hochgenaue Positionsmessung des Spielgerätes bzw. Spielballs zu ermöglichen.

Gemäß einem ersten Ausführungsbeispiel der vorliegenden Erfindung kann ein Spielgerät bzw. ein Ball in der Nähe eines Tors über ein Magnetfeld aktiviert werden. Dabei wird das Magnetfeld am Tor beispielsweise mittels Spulen in bzw. an den Torpfosten und/oder hinter dem Tor erzeugt. Kommt der Ball in die Nähe des Tors, so wird dies durch einen in dem Ball integrierten Magnetfeldsensor erkannt, wobei der Ball außerhalb einer Reichweite des Aktivierungssignals bzw. des Magnetfeldes des Magnetfeldmessungen beispielsweise mit einer geringen Abtastrate durchführt, um Strom zu sparen. Sobald das durch die Spulen erzeugte Magnetfeld im Torraum gemessen wird schaltet sich ein Messsystem bzw. eine Elektronik im Ball auf eine höhere Abtastrate, um Messdaten bzgl. des Magnetfeldes in kürzeren Zeitabständen und damit hochauflösender aufzunehmen.

Gemäß einem zweiten Aspekt der vorliegenden Erfindung kann die höhere Abtastrate der Ballelektronik durch ein Funksignal, insbesondere ein schwaches Funksignal, in der Nähe des Tors aktiviert werden, dazu ist in der Nähe des Tors bzw. am Tor ein Funksender angebracht, um das Funksignal zur Ballaktivierung auszusenden. Bei diesem Aspekt weist der Ball einen auf das Funksignal abgestimmten Funkempfänger auf.

Bei dem erfindungsgemäßen Konzept wird eine Magnetfelddetektion, insbesondere eine hochgenaue Magnetfelddetektion, also immer nur dann eingeschaltet, wenn sie benötigt wird. Dies ist beispielsweise dann der Fall, wenn sich der Ball in der Nähe des Tores befindet. Ist der Ball außer Reichweite des im Torraum vorherrschenden Magnetfeldes, so wird die Elektronik im Ball auf einen Energiesparmodus, beispielsweise mittels einer geringeren Abtastrate, gebracht.

In dem Energiesparmodus misst der Ball gemäß einem Ausführungsbeispiel ständig, aber sehr stromsparend mit geringer Abtastrate, ein am Ort des Balls vorherrschendes Magnetfeld, welches außerhalb des Torraums beispielsweise das Erdmagnetfeld sein kann. Wie im Vorhergehenden bereits beschrieben wurde, kann das zur Torerkennung von den Spulen erzeugte Magnetfeld bzw. das Funksignal zur Aktivierung nur in relativ geringer Distanz zum Tor erkannt werden. Sobald der Ball bzw. der im Ball vorhandene Magnetfeldsensor oder Funkempfänger dieses Magnetfeld bzw. das Funksignal erkennt, wird auf eine höhere oder maximale Abtastrate der Ballelektronik umgeschaltet.

Ein Vorteil der vorliegenden Erfindung besteht darin, dass eine Aktivierung der Elektronik zum hochauflösenden Erfassen eines Magnetfeldes erst dann durchgeführt wird, wenn sie benötigt wird. Dadurch kann in Zeiträumen, in denen keine hochgenauen Messungen notwendig sind, Energie gespart werden und somit eine längere Lebensdauer einer Batterie zur Energieversorgung des Balls gewährleistet werden.

Bevorzugte Ausführungsbeispiele der vorliegenden Erfindung werden nachfolgend Bezug nehmend auf die beiliegenden Zeichnungen näher erläutert. Es zeigen:

Fig. 1      eine schematische Darstellung eines Balls in einem Torraum zur Erläuterung des erfindungsgemä- ßen Konzepts;

Fig. 2      ein Flussdiagramm zur Erläuterung eines Verfah- rens zum Aktivieren eines Spielballs gemäß einem Ausführungsbeispiel der vorliegenden Erfindung;

Fig. 3      einen Spielball gemäß einem Ausführungsbeispiel der vorliegenden Erfindung; und

Fig. 4a und 4b      zwei Ausführungsbeispiele eines Aktivierungssi- gnalerfassers.

Bezüglich der nachfolgenden Beschreibung sollte beachtet werden, dass bei den unterschiedlichen Ausführungsbeispielen gleich oder gleich wirkende Funktionselemente gleiche Bezugszeichen aufweisen und somit die Beschreibungen dieser Funktionselemente in den verschiedenen nachfolgend dargestellten Ausführungsbeispielen untereinander austauschbar sind.

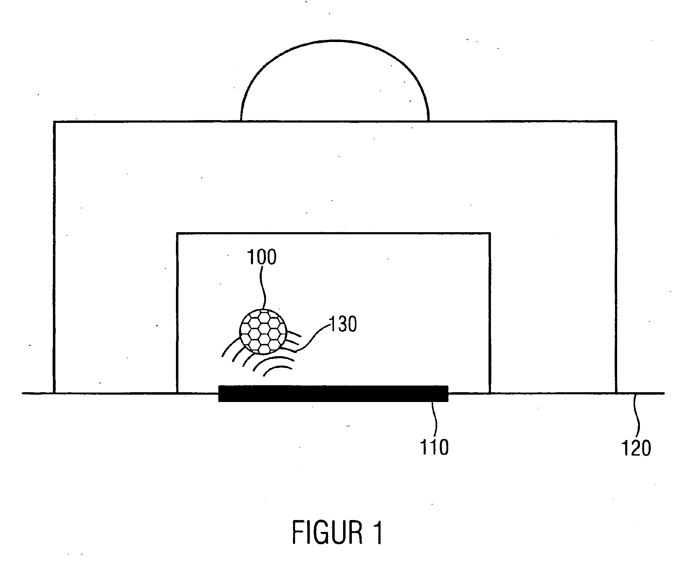

Fig. 1 zeigt einen Spielball 100 in unmittelbarer Nähe eines Fußballtors 110 welches auf einer Torlinie 120 steht. In einem vordefinierten Raum um das Tor 110 ist von dem Ball 100 ein Aktivierungssignal 130 empfangbar, um eine Messelektronik im Spielball 100 einzuschalten bzw. eine Abtastrate der Messelektronik zu erhöhen.

Gemäß Ausführungsbeispielen kann es sich bei dem Aktivierungssignal 130 um ein Magnetfeld, insbesondere ein magnetisches Wechselfeld verschieden vom Erdmagnetfeld, handeln, welches in einem vorbestimmten Bereich um das Tor 110 messbar ist. Dabei kann das beispielsweise von an dem Tor 110 angebrachten Spulen erzeugte Magnetfeld auch zu einer Torentscheidung herangezogen werden, d. h. zu einer Entscheidung, ob der Ball 100 die Torlinie 120 überschritten hat.

Gemäß einem weiteren Ausführungsbeispiel kann das Aktivierungssignal 130 auch ein in dem vorbestimmten Bereich um das Tor 110 empfangbares schwaches Funksignal sein. Dazu befindet sich in der Nähe des Tors 110 beispielsweise ein geeigneter Funksender, um das Funksignal auszusenden.

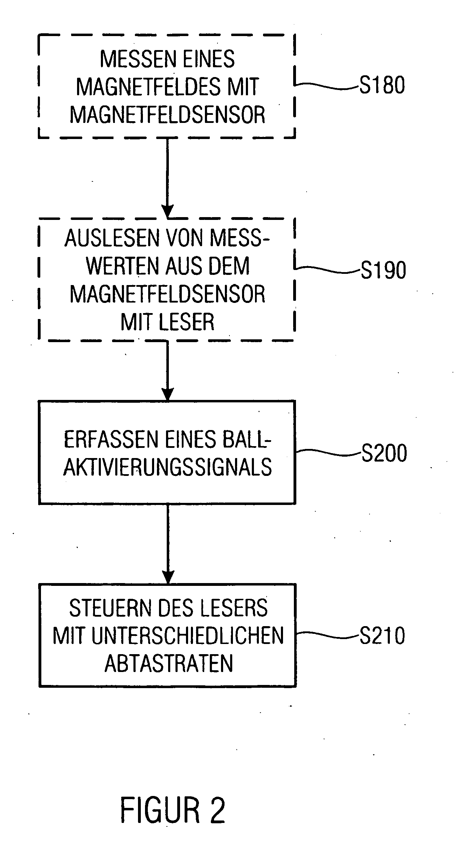

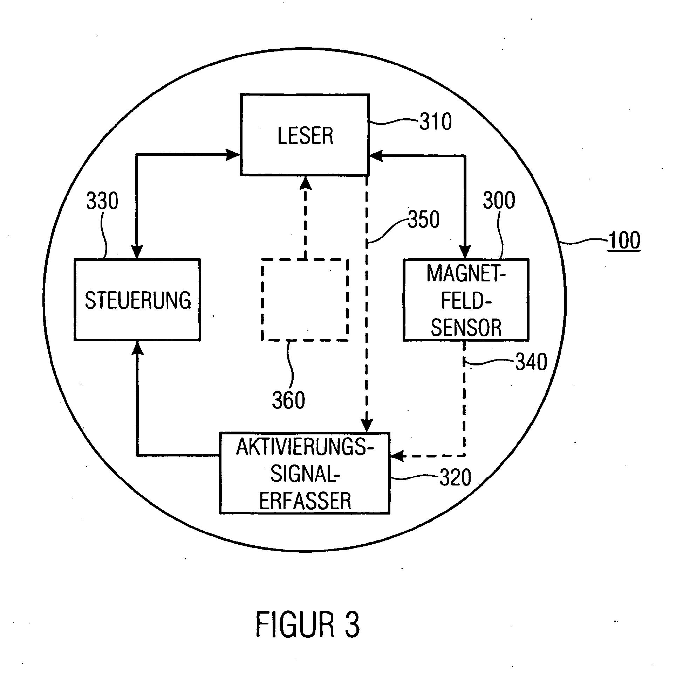

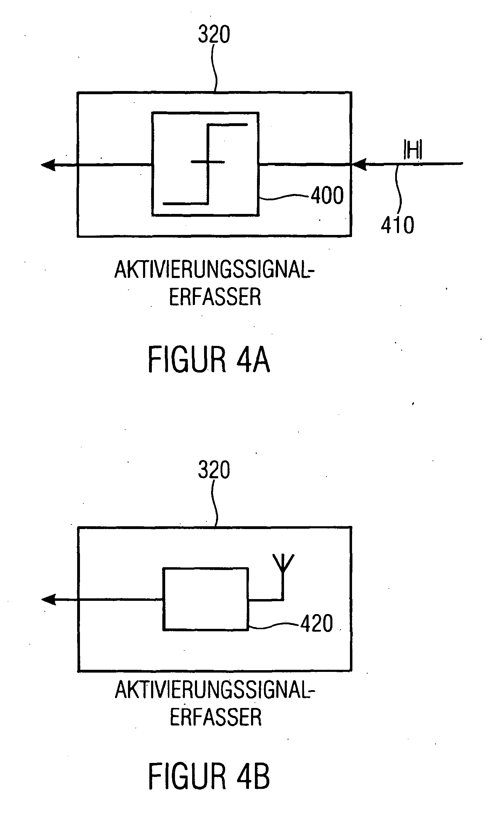

Ob das Aktivierungssignal 130 ein von den Spulen am Tor erzeugtes Magnetfeld oder ein Funksignal ist, hat Auswirkungen auf die Elektronik im Ball 100. Verschiedene Ausführungsbeispiele des Spielballs 100 gemäß der vorliegenden Erfindung werden im Nachfolgenden noch anhand von Fig. 3 und 4 näher erläutert. Davor soll anhand von Fig. 2 ein Verfahren zum Aktivieren des Spielballs 100 gemäß einem Ausführungsbeispiel der vorliegenden Erfindung näher erläutert werden.

In einem Schritt S200 wird von dem Ball 100 ein Ballaktivierungssignal 130 erfasst, welches, wie im Vorhergehenden bereits beschrieben wurde, ein Magnetfeld oder ein Funksignal sein kann. In einem darauf folgenden Schritt S210 wird, basierend auf dem Aktivierungssignal 130, ein Leser zum Auslesen eines Magnetfeldsensors im Ball gesteuert.

Ist das Aktivierungssignal 130 ein Funksignal, so kann gemäß einem Ausführungsbeispiel der vorliegenden Erfindung der Leser zum Auslesen des Magnetfeldsensors im Falle des Vorhandenseins des Funksignals eingeschaltet werden oder eine Abtastrate des Lesers auf eine höhere Abtastrate geändert werden.

Für den Fall, dass das Ballaktivierungssignal 130 ein von den Spulen am Tor 110 erzeugtes Magnetfeld ist, gehen dem Schritt 200 zwei zusätzliche Schritte S180 und S190 voraus. In dem Schritt S180 misst der Ball mit einer niedrigen, stromsparenden Abtastrate ein ihn umgebendes Magnetfeld mit dem im Ball integrierten Magnetfeldsensor, um die von dem Magnetfeldsensor gemessenen Werte im Schritt S190 mit einem Leser auszulesen. Erst wenn Magnetfeldmesswerte bzw. magnetische Feldstärkewerte über einem ersten Schwellwert erkannt werden, wird dadurch die Ballaktivierung bzw. die Aktivierung der höheren Abtastrate ausgelöst. Dabei kann der erste Schwellwert gemäß Ausführungsbeispielen größer als ein Betrag des Erdmagnetfeldes an der Erdoberfläche an einem Ort des Spielballs 100 sein. An der Erdoberfläche ist das Erdmagnetfeld relativ schwach. Es variiert zwischen 60 Mikrotesla an den Polen und etwa 30 Mikrotesla am Äquator. In Mitteleuropa sind es ca. 48 Mikrotesla, wobei ca. 20 Mikrotesla in der horizontalen und ca. 44 Mikrotesla in der vertikalen Richtung auftreten. Gemäß Ausführungsbeispielen ergibt sich somit ein geeigneter Wertebereich für den ersten Schwellwert von 40 bis 70 Mikrotesla. Ein magnetisches Wechselfeld kann aufgrund seiner Frequenz schon bei kleineren Feldstärken, quasi als Modulationsfeld des Erdmagnetfelds, erkannt werden.

Ein Spielball 100 gemäß Ausführungsbeispielen der vorliegenden Erfindung zum Durchführen des in Fig. 2 schematisch gezeigten Verfahrens ist in Fig. 3 dargestellt.

Der Spielball 100 weist einen Magnetfeldsensor 300, einen Leser 310 zum Auslesen des Magnetfeldsensors, einen Aktivierungssignalerfasser 320 zum Erfassen eines Aktivierungssignals 130 und eine Steuerung 330 zum Steuern des Lesers 310 auf.

Der Aktivierungssignalerfasser 320 ist mit der Steuerung 330 gekoppelt, so dass im Falle des Vorhandenseins eines Aktivierungssignals 130 der Leser 310 den Magnetfeldsensor 300 mit einer ersten Abtastrate ausliest, und im Falle eines Nichtvorhandenseins des Aktivierungssignals der Leser 310 den Magnetfeldsensor mit einer zweiten kleineren Abtastrate ausliest. Dabei übernimmt die Steuerung 330 die Abtastratensteuerung des Lesers 310. Gemäß Ausführungsbeispielen ist die Steuerung 330 ausgebildet ist, um die erste Abtastrate wenigstens zehn mal größer, bevorzugt wenigstens 100-mal größer einzustellen als die zweite Abtastrate. Gemäß Ausführungsbeispielen ist der Magnetfeldsensor 300 ein dreidimensionaler Magnetfeldsensor, d. h. er kann magnetische Feldstärkekomponenten ($H_x$, $H_y$, $H_z$) entsprechend den drei Raumkoordinaten (x, y, z) messen, welche später auch für eine Feldstärkebetragsbildung gemäß $| H |= \sqrt{H_x^2 + H_y^2 + H_z^2}$ herangezogen werden können. Der Magnetfeldsensor 300 kann Hall-Sensoren oder magnetoresistive Elemente aufweisen. Des Weiteren kann in dem Magnetfeldsensor 300 bereits ein Analog-Digital Umsetzer integriert sein.

Für den Fall, dass der Ball 100 über das im Torraum von Spulen erzeugte Magnetfeld aktiviert wird, ist der Aktivierungssignalerfasser 320 mit dem Magnetfeldsensor 300 oder mit dem Leser 310 zum Auslesen des Magnetfeldsensors gekoppelt, wie es durch die Bezugszeichen 340 bzw. 350 angedeutet ist. In diesem Fall umfasst der Aktivierungssignalerfasser 320 gemäß Ausführungsbeispielen eine Einrichtung zum Vergleichen von von dem Magnetfeldsensor 300 gemessenen Magnetfeldmesswerten als Aktivierungssignal 130 mit dem ersten Schwellwert, wie es schematisch in Fig. 4a gezeigt ist. Dabei kann die Einrichtung zum Vergleichen ein Schwellwertentscheider sein.

Fig. 4a zeigt einen Aktivierungssignalerfasser 320 mit einem Schwellwertentscheider 400, wobei an einem Eingang des Aktivierungssignalerfassers 320 bzw. des Schwellwertentscheiders 400 Feldstärkemesswerte 410 geführt werden. Diese Feldstärkemesswerte können entweder direkt vom Magnetfeldsensor 300 über die Koppelstrecke 340 an den Aktivierungssignalerfasser 320 gesendet werden, oder vom Leser 310 über die Koppelstrecke 350. Gemäß Ausführungsbeispielen entsprechen die Feldstärkemesswerte 410 dem Betrag |H| des an dem Ort des Balls 100 gemessenen Magnetfelds. Liegt die gemessene magnetische Feldstärke über dem ersten Schwellwert, so wird ein Signal an die Steuerung 330 weitergegeben, wodurch die Steuerung 330 den Leser 310 zum Auslesen des Magnetfeldsensors 300 mit einer höheren Abtastrate ansteuert, als bei Nichtvorhandensein des Funksignals.

Bei einem magnetischen Wechselfeld als Aktivierungssignal kann der Schwellwertentscheider 400 auch das Vorhandensein einer Frequenz in den magnetische Feldstärkemesswerten überprüfen.

Soll die Ballaktivierung bzw. der Abtastratenwechsel aufgrund eines Funksignals als Aktivierungssignal 130 erfolgen, so weist der Aktivierungssignalerfasser 320 gemäß Ausführungsbeispielen ferner einen Funkempfänger zum Empfangen des Funksignals als Auswertungssignal auf, wie es schematisch in Fig. 4b gezeigt ist.

Fig. 4b zeigt einen Aktivierungssignalerfasser 320 mit einem Funkempfänger 420. Dabei kann der Funkempfänger 420 sehr einfach ausgebildet sein, um beispielsweise lediglich eine RF-Leistungsdetektion in einem vorgegebenen Frequenzbereich durchzuführen. Liegt die empfangene RF-Leistung in dem für das Funksignal vorgesehene Frequenzband über einem ersten RF-Leistungsschwellwert, so wird ein Signal an die Steuerung 330 weitergegeben, wodurch die Steuerung 330 den Leser 310 zum Auslesen des Magnetfeldsensors 300 mit einer höheren Abtastrate ansteuert, als bei Nichtvorhandensein des Funksignals. Auch hier kann der Aktivierungssignalerfasser 320 also einen Schwellwertentscheider aufweisen, um bei einem Überschreiten eines RF-Leistungsschwellwerts das Signal an die Steuerung 330 auszulösen.

Wenn also aufgrund eines Vorhandenseins eines Aktivierungssignals, also eines Magnetfeldes oder eines Funksignals, eine Aktivierung erkannt wird, wird der Magnetfeldsensor 300 mit einer ersten Abtastrate ausgelesen und wenn keine Aktivierung erkannt wird, wird der Magnetfeldsensor 300 mit einer zweiten kleineren Abtastrate ausgelesen. In dem Fall der Aktivierung durch das Funksignal kann die zweite Abtastrate auch Null sein, d. h. bei Nichtvorhandensein des Aktivierungssignals wird überhaupt keine Magnetfeldmessung vorgenommen.

Gemäß der vorliegenden Erfindung weist der Spielball 100 ferner einen Funksender zum Senden der ausgelesenen Magnetfeldwerte an eine zentrale Auswertevorrichtung auf, wie es mit Bezugszeichen 360 angedeutet ist. Die zentrale Auswertevorrichtung kann dann mittels der Magnetfeldwerte beispielsweise eine Torentscheidung treffen.

Des Weiteren kann der Spielball 100 ferner einen Speicher zum Speichern der ausgelesenen Magnetfeldwerte aufweisen. Somit kann beispielsweise nach Spielende oder nach einer Torsituation durch Auslesen des Speichers entschieden werden, ob ein Tor gefallen ist oder nicht.

Zusammenfassend schafft das erfindungsgemäße Konzept eine Möglichkeit zur Aktivierung eines Spielgeräts, insbesondere eines Spielballs, in der Nähe eines Tors über einem Aktivierungssignal, welches beispielsweise ein in einem Torraum vorhandenes schwaches Funksignal oder ein Magnetfeld von an dem Tor angebrachten Spulen sein kann. Dazu weist der Ball gemäß Ausführungsbeispielen einen Aktivierungssignalerfasser auf, der entweder Magnetfeldmesswerte 410 mit einer kleinen Abtastrate von dem Magnetfeldsensor 300 oder dem Magnetfeldsensorleser 310, oder das Funksignal als Aktivierungssignal empfängt und daraufhin über die Steuereinrichtung 330 eine Abtastrate des Magnetfeldmesssystems im Ball in der Nähe des Tors erhöht.

Gemäß einem Ausführungsbeispiel der vorliegenden Erfindung wird der Magnetfeldsensor 300 bei Nichtvorhandensein des Aktivierungssignals 130 beispielsweise alle 100 Millisekunden (ms) ausgelesen. Sobald das Aktivierungssignal vom Ball 100 bzw. dem Aktivierungssignalerfasser 320 erkannt wird, wird der Magnetfeldsensor 300 in wesentlich kürzeren Zeitabständen, beispielsweise Zeitabständen kleiner als 1 ms, ausgelesen.

Bei dem erfindungsgemäßen Konzept wird eine höhere Abtastrate immer nur kurz angeschaltet, nämlich so lange das Aktivierungssignal 130 (Magnetfeld, Funksignal) vom Ball 100 empfangbar ist, um Energie zu sparen. Wenn der Ball 100 über sehr lange Zeit, beispielsweise einen Tag, kein Aktivierungssignal mehr erkennt, steuert die Steuerung 330 die Abtastrate des Magnetfeldsensors 300 beispielsweise derart, dass Messwerte nur noch alle 10 Sekunden gelesen werden.

Dadurch kann der Energieverbrauch des Balls nochmals drastisch gesenkt werden. Da gemäß einem Ausführungsbeispiel der vorliegenden Erfindung der Zustand einer Batterie im Ball 100 abgefragt werden kann, ist sichergestellt, dass die Abtastrate im Ball 100 bei einem Spielbeginn wieder beispielsweise auf 100 Millisekunden bzw. 10 Hz gestellt ist.

Gemäß einem Ausführungsbeispiel der vorliegenden Erfindung kann die Stromversorgung im Ball 100 auf beispielsweise 300 Stunden aktive Spielzeit ausgelegt sein. In einem so genannten "Power-down"-Betrieb kann die Lebensdauer der Batterie des Balls 100 beispielsweise auf drei Jahre ausgelegt sein. Durch die Verwendung einer Batterie kann auf eine aufwändige Ladetechnik eines Akkumulators komplett verzichtet werden.

An dieser Stelle soll erwähnt werden, dass die Energieversorgung des Balls 100 natürlich auch ohne Batterie mittels Akkumulatoren erfolgen könnte, welche beispielsweise durch natürliche Vorgänge, wie Lichteinstrahlung oder Bewegung aufgeladen werden können. Dies kann z. B. mittels Induktion in einer Spule erfolgen. Dies würde jedoch relativ aufwändige Ladetechniken erfordern.

Mit dem erfindungsgemäßen Konzept kann nicht erkannt werden, wie viele Bälle im Spiel sind. Ein Einwurf des Balls in das Spielfeld kann nicht erkannt werden. Erst wenn sich der Ball 100 in unmittelbarer Nähe zum Tor 110 befindet, wird er als Spielball erkannt. Dabei können allerdings Positionen hinter dem Tor erkannt werden. Überquert der Ball die Torlinie 120, so kann ein Tor erkannt und angezeigt werden. Eine Erkennung dessen, ob der Ball hinter dem Tor ist, kann beispielsweise dadurch erfolgen, dass in diesem Fall eine Feldstärke einer Spule hinter dem Tor unverhältnismäßig hoch gegenüber der Feldstärke von Spulen an/im Torrahmen ist. Um dies zu erkennen, weist der Ball bzw. der Aktivierungssignalerfasser 320 gemäß Ausführungsbeispielen eine Einrichtung zum Vergleichen der Magnetfeldmesswerte mit einem zweiten Schwellwert größer als dem ersten Schwellwert auf, um bei Überschreiten des zweiten Schwellwerts eine Aktivierung zu verhindern bzw. abzuschalten. Wird der zweite Schwellwert überschritten, ist dies ein Zeichen dafür, dass sich der Ball hinter dem Tor befindet. Dieses Konzept kann auch bei der Aktivierung durch ein Funksignal angewendet werden, wobei der Sender des Funksignals hinter dem Tor platziert ist und somit hinter dem Tor eine größere Feldstärke des Funksignals als vor dem Tor messbar ist. Dazu weist der Ball bzw. der Aktivierungssignalerfasser 320 gemäß Ausführungsbeispielen Einrichtung zum Vergleichen von einer von dem Empfänger 420 empfangenen Funkleistung mit einem zweiten RF-Leitsungsschwellwert größer als dem ersten RF-Leitsungsschwellwert aufweist, um bei Überschreiten des zweiten Schwellwerts eine Aktivierung zu verhindern.

Abschließend sollte darauf hingewiesen werden, dass die vorliegende Erfindung nicht auf die jeweiligen Bauteile des Spielballs 100 oder die erläuterte Vorgehensweise beschränkt ist, und dass diese Bauteile und Verfahren variieren könnten. Die hier verwendeten Begriffes sind lediglich dafür bestimmt, besondere Ausführungsformen zu beschreiben und werden nicht einschränkend verwendet. Wenn in der Beschreibung und in den Ansprüchen die Einzahl oder unbestimmte Artikel verwendet werden, beziehen sich diese auf die Mehrzahl dieser Elemente, solange nicht der Gesamtzusammenhang eindeutig etwas anderes deutlich macht. Dasselbe gilt in umgekehrter Richtung.

Abhängig von den Gegebenheiten können die erfindungsgemäßen Verfahren in Hardware oder in Software implementiert werder. Die Implementierung kann auf einem digitalen Speichermedium, z.B. einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Computer und/oder Mikrocontroller abläuft. In anderen Worten ausgedrückt, ist die vorliegende Erfindung somit auch als ein Computerprogramm mit einem Programmcode zur Durchführung des Verfahrens zur Ballaktivierung, wenn das Computerprogramm auf einem Computer und/oder Mikrocontroller abläuft.

## Patentansprüche

1. Spielball (100) mit folgenden Merkmalen:

   einem Magnetfeldsensor (300);
   einem Leser (310) zum Auslesen des Magnetfeldsensors;
   einem Funksender (360) zum Senden der ausgelesenen Magnetfeldwerte;
   einem Aktivierungssignalerfasser (320) zum Erfassen eines Aktivierungssignals (130) wobei eine Aktivierung **dadurch** ausgelöst wird, dass eine ausgelesene Magnetfeldstärke einen Schwellwert überschreitet; und
   einer Steuerung (330) zum Steuern des Lesers (310), so dass dann, wenn aufgrund des Aktivierungssignals (130) eine Aktivierung erkannt wird mit einer ersten Abtastrate ausgelesen wird und dann, wenn keine Aktivierung erkannt wird, mit einer zweiten, kleineren Abtastrate ausgelesen wird.

2. Spielball (100) mit folgenden Merkmalen:

einem Magnetfeldsensor (300);
einem Leser (310) zum Auslesen des Magnetfeldsensors;
einem Funksender (360) zum Senden der ausgelesenen Magnetfeldwerte;
einem Aktivierungssignalerfasser (320) zum Erfassen eines Aktivierungssignals (130) wobei eine Aktivierung **dadurch** ausgelöst wird, dass die von einem Funkempfänger (420) empfangene Funkleistung einen Schwellwert überschreitet.; und
einer Steuerung (330) zum Steuern des Lesers (310), so dass dann, wenn aufgrund des Aktivierungssignals (130) eine Aktivierung erkannt wird mit einer ersten Abtastrate ausgelesen wird und dann, wenn keine Aktivierung erkannt wird, mit einer zweiten, kleineren Abtastrate ausgelesen wird.

3. Spielball gemäß Anspruch 1, wobei der Magnetfeldsensor (300) ein dreidimensionaler Magnetfeldsensor ist.

4. Spielball gemäß einem der Ansprüche 1 oder 3, wobei der Aktivierungssignalerfasser (320) eine Einrichtung (400) zum Vergleichen von mit dem Magnetfeldsensor (300) gemessenen Magnetfeldmesswerten als Aktivierungssignal (130) mit dem besagten Schwellwert aufweist.

5. Spielball gemäß Anspruch 4, wobei der besagte Schwellwert größer ist als ein Betrag des Erdmagnetfeldes an der Erdoberfläche an einem Ort des Spielballs (100).

6. Spielball gemäß Anspruch 4 oder 5, wobei der Aktivierungssignalerfasser (320) eine Einrichtung zum Vergleichen der Magnetfeldmesswerte mit einem weiteren Schwellwert größer als dem besagten Schwellwert aufweist, um bei Überschreiten des weiteren Schwellwerts eine Aktivierung zu verhindern.

7. Spielball gemäß Anspruch 2, wobei der Aktivierungssignalerfasser (320) eine Einrichtung (400) zum Vergleichen von einer von dem Empfänger (420) empfangenen Funkleistung mit dem besagten Schwellwert aufweist.

8. Spielball gemäß Anspruch 7, wobei der Aktivierungssignalerfasser (320) eine Einrichtung zum Vergleichen von der von dem Empfänger (420) empfangenen Funkleistung mit einem weiteren Schwellwert größer als dem besagten Schwellwert aufweist, um bei Überschreiten des weiteren Schwellwerts eine Aktivierung zu verhindern.

9. Spielball gemäß einem der vorhergehenden Ansprüche, bei dem die Steuerung (330) ausgebildet ist, um die erste Abtastrate wenigstens zehn mal größer einzustellen als die zweite Abtastrate.

10. Verfahren zum Aktivieren eines Spielballs (100) mit einem Magnetfeldsensor (300), mit folgenden Schritten:

Messen eines Magnetfeldes mit dem Magnetfeldsensor (300);
Auslesen von Messwerten aus dem Magnetfeldsensor (300) mit einem Leser (310);
Übertragen der Messwerte mit einem Funksender (360) an eine Auswerteeinheit; und Erfassen eines Aktivierungssignals wobei eine Aktivierung entweder **dadurch** ausgelöst wird, dass die Magnetfeldstärke der ausgelesenen Magnetfelder einen Magnetfeldstärkenschwellwert überschreitet oder **dadurch** ausgelöst wird, dass die von einem Funkempfänger (420) empfangene Funkleistung einen Funkleistungsschwellwert überschreitet.; und
Steuern des Lesers (310) zum Auslesen des Magnetfeldsensors (300), so dass dann, wenn aufgrund des Aktivierungssignals eine Aktivierung erkannt wird, mit einer ersten Abtastrate ausgelesen wird und dann, wenn keine Aktivierung erkannt wird, mit einer zweiten kleineren Abtastrate ausgelesen wird.

11. System umfassend einen Spielball nach einem der Ansprüche 1 oder 3-9 sowie ein Tor, wobei zur Detektion des Übertritts des Spielballs (100) über eine Torlinie am Tor Spulen zur Erzeugung von Magnetfeldern angebracht sind, deren Magnetfeldwerte aus dem im Spielball angebrachten Magnetfeldsensor (300) ausgelesen und durch den Funksender (360) an eine zentrale Auswertevorrichtung weitergleitet werden, wobei die Steuerung (330) die Abtastrate des Magnetfeldsensors in Abhängigkeit von einer ausgelesenen Magnetfeldstärke steuert, wobei jeweils bei Überschreiten eines vorgegebenen Schwellwertes das Magnetfeld mit einer ersten Abtastrate und bei Unterschreiten des vorgegebenen Schwellwertes mit einer zweiten kleineren Abtastrate ausgelesen wird.

12. System umfassend einen Spielball nach einem der Ansprüche 2-9 sowie ein Tor, wobei zur Detektion des Übertritts des Spielballs (100) über eine Torlinie am Tor Spulen zur Erzeugung von Magnetfeldern angebracht sind, deren Magnetfeldwerte aus dem im Spielball angebrachten Magnetfeldsensor (300) ausgelesen und durch den Funksender (360) an eine zentrale Auswertevorrichtung weitergeleitet werden, wobei die Steuerung (330) die Abtastrate des Magnetfeldsensors in Abhängigkeit von einer von einem Funkempfänger (420) empfangenen Funksignalstärke steuert, wobei jeweils bei Überschreiten eines vorgegebenen Schwellwertes das Magnetfeld mit einer ersten Abtastrate und bei Unterschreiten des vorgegebenen Schwellwertes mit einer zweiten kleineren Abtastrate ausgelesen wird.

**13.** Computerprogramm mit einem Programmcode konzipiert zur Durchführung eines Verfahrens gemäß dem Anspruch 10, wenn das Programm auf einem Computer abläuft.

**Claims**

**1.** Game ball (100) with the following features:

a magnetic field sensor (300);
a reader (310) for taking readings from the magnetic field sensor;
a radio transmitter (360) for transmitting readings of the magnetic field values;
an activation signal detector (320) for detecting an activation signal (130), wherein activation is triggered when a reading of a magnetic field intensity exceeds a threshold value; and
a control system (330) for controlling the reader (310) so that whenever activation is detected on the basis of the activation signal (130), reading is operated at a first scanning rate, and if no activation is detected, reading is operated at a second, slower scanning rate.

**2.** Game ball (100) with the following features:

a magnetic field sensor (300);
a reader (310) for taking readings from the magnetic field sensor;
a radio transmitter (360) for transmitting readings of the magnetic field values;
an activation signal detector (320) for detecting an activation signal (130), wherein activation is triggered when the radio power received by a radio receiver (420) exceeds a threshold value; and
a control system (330) for controlling the reader (310) so that whenever activation is detected on the basis of the activation signal (130), reading is operated at a first scanning rate and if no activation is detected, reading is operated at a second, slower scanning rate.

**3.** Game ball as claimed in claim 1, in which the magnetic field sensor (300) is a three-dimensional magnetic field sensor.

**4.** Game ball as claimed in one of claims 1 or 3, in which the activation signal detector (320) has a unit (400) for comparing magnetic field measurement values measured by the magnetic field sensor (300) and constituting an activation signal (130) with said threshold value.

**5.** Game ball as claimed in claim 4, in which said threshold value is higher than an amount of the earth's magnetic field on the earth's surface at a specific point of the game ball (100).

**6.** Game ball as claimed in claim 4 or 5, in which the activation signal detector (320) has a unit for comparing the magnetic field measurement values with another threshold higher than said threshold in order to prevent activation when the other threshold is exceeded.

**7.** Game ball as claimed in claim 2, in which the activation signal detector (320) has a unit (400) for comparing a radio power received by the receiver (420) with said threshold value.

**8.** Game ball as claimed in claim 7, in which the activation signal detector (320) has a unit for comparing the radio power received by the receiver (420) with another threshold value higher than said threshold value in order to prevent activation when the other threshold value is exceeded.

**9.** Game ball as claimed in one of the preceding claims, whereby the control system (330) is configured to set the first scanning rate so that it is at least ten times faster than the second scanning rate.

**10.** Method of activating a game ball (100) with a magnetic field sensor (300), comprising the following steps:

measuring a magnetic field by means of the magnetic field sensor (300);
taking readings of measurement values from the magnetic field sensor (300) by means of a reader (310);
transmitting the measurement values by means of a radio transmitter (360) to an evaluation unit; and
detecting an activation signal, wherein activation is triggered either due to the fact that the magnetic field intensity of the read magnetic fields has exceeded a magnetic field intensity threshold value or due to the fact that the radio power received by a radio receiver (420) has exceeded a radio power threshold value; and controlling the reader (310) to read the magnetic field sensor (300) in such a way that whenever activation is detected on the basis of the activation signal, reading is operated at a first scanning rate and if no activation is detected, reading is operated at a second, slower scanning rate.

11. System, comprising a game ball as claimed in one of claims 1 or 3-9 and a goal, for detecting when the game ball (100) crosses a goal line, with coils mounted on the goal for generating magnetic fields, the magnetic field values of which are read by the magnetic field sensor (300) fitted in the game ball and forwarded by the radio transmitter (360) to a central evaluation device, and the control system (330) controls the scanning rate of the magnetic field sensor as a function of a read magnetic field intensity, and reading is operated at a first scanning rate whenever the magnetic field exceeds a predefined threshold value and reading is operated at a second, slower scanning rate when there is a drop below the predefined threshold value.

12. System, comprising a game ball as claimed in one of claims 2-9 and a goal, for detecting when the game ball (100) crosses a goal line, with coils mounted on the goal for generating magnetic fields, the magnetic field values of which are read by the magnetic field sensor (300) fitted in the game ball and forwarded by the radio transmitter (360) to a central evaluation device, and the control system (330) controls the scanning rate of the magnetic field sensor as a function of a radio signal intensity received by a radio receiver (420), and reading is operated at a first scanning rate whenever the magnetic field exceeds a predefined threshold value and if there is a drop below the predefined threshold value, reading is operated at a second, slower scanning rate.

13. Computer programme with a programme code designed to implement a method as claimed in claim 10 when the programme is running on a computer.

## Revendications

1. Balle de jeu (100) ayant les caractéristiques suivantes :

   - un capteur de champ magnétique (300) ;
   - un lecteur (310) pour lire le capteur de champ magnétique ;
   - un émetteur radio (360) pour émettre les valeurs de champ magnétique lues ;
   - un détecteur de signal d'activation (320) pour détecter un signal d'activation (130), une activation étant déclenchée par le fait qu'une intensité de champ magnétique lue dépasse une valeur de seuil ;
   - et une commande (330) pour commander le lecteur (310) de telle sorte que, si une activation est détectée sur la base du signal d'activation (130), on effectue la lecture avec un premier taux d'échantillonnage et, si aucune activation n'est détectée, on effectue la lecture avec un second taux d'échantillonnage inférieur.

2. Balle de jeu (100) ayant les caractéristiques suivantes :

   - un capteur de champ magnétique (300) ;
   - un lecteur (310) pour lire le capteur de champ magnétique ;
   - un émetteur radio (360) pour émettre les valeurs de champ magnétique lues ;
   - un détecteur de signal d'activation (320) pour détecter un signal d'activation (130), une activation étant déclenchée par le fait que la puissance radio reçue par un récepteur radio (420) dépasse une valeur de seuil ;
   - et une commande (330) pour commander le lecteur (310) de telle sorte que, si une activation est détecté sur la base du signal d'activation (130), on effectue la lecture avec un premier taux d'échantillonnage et, si aucune activation n'est détectée, on effectue la lecture avec un second taux d'échantillonnage inférieur.

3. Balle de jeu selon la revendication 1, le capteur de champ magnétique (300) étant un capteur de champ magnétique tridimensionnel.

4. Balle de jeu selon l'une des revendications 1 ou 3, le détecteur de signal d'activation (320) comportant un dispositif (400) pour comparer des valeurs de champ magnétique mesurées avec le capteur de champ magnétique (300) en tant que signal d'activation (130) à ladite valeur de seuil.

5. Balle de jeu selon la revendication 4, ladite valeur de seuil étant supérieure à une valeur du champ magnétique terrestre à la surface du sol à un endroit de la balle de jeu (100).

6. Balle de jeu selon la revendication 4 ou 5, le détecteur de signal d'activation (320) comportant un dispositif pour comparer les valeurs mesurées de champ magnétique à une autre valeur de seuil supérieure à ladite valeur de seuil pour empêcher une activation en cas de dépassement de l'autre valeur de seuil.

7. Balle de jeu selon la revendication 2, le détecteur de signal d'activation (320) comportant un dispositif (400) pour comparer une puissance radio reçue par le récepteur (420) à ladite valeur de seuil.

8. Balle de jeu selon la revendication 7, le détecteur de signal d'activation (320) comportant un dispositif pour comparer la puissance radio reçue par le récepteur (420) à une autre valeur de seuil supérieure à ladite valeur de seuil pour empêcher une activation en cas de dépassement de l'autre valeur de seuil.

9. Balle de jeu selon l'une des revendications précédentes, la commande (330) étant conçue pour régler le premier taux d'échantillonnage à une valeur au moins dix fois plus grand que le second taux d'échantillonnage.

10. Procédé d'activation d'une balle de jeu (100) avec un capteur de champ magnétique (300), avec les étapes suivantes :

    - mesure d'un champ magnétique avec le capteur de champ magnétique (300) ;
    - lecture de valeurs mesurées dans le capteur de champ magnétique (300) avec un lecteur (310) ;
    - transmission des valeurs mesurées avec un émetteur radio (360) à une unité d'évaluation ; et
    - détection d'un signal d'activation, une activation étant déclenchée soit par le fait que l'intensité de champ magnétique des champs magnétiques lus dépasse une valeur de seuil d'intensité de champ magnétique soit par le fait que la puissance radio reçue par un récepteur radio (420) dépasse une valeur de seuil de puissance radio ; et
    - commande du lecteur (310) pour la lecture du capteur de champ magnétique (300) de telle sorte que, si une activation est détectée sur la base du signal d'activation, on effectue la lecture avec un premier taux d'échantillonnage et, si aucune activation n'est détectée, on effectue la lecture avec un second taux d'échantillonnage inférieur.

11. Système comprenant une balle de jeu selon l'une des revendications 1 ou 3 à 9. ainsi qu'un but, des bobines destinées à la production de champs magnétiques étant installées sur le but en vue de la détection du passage de la balle de jeu (100) au-delà d'une ligne de but, les valeurs de champ magnétique desdites bobines étant lues dans le capteur de champ magnétique (300) installé dans la balle de jeu et retransmises par l'émetteur radio (360) à un dispositif central d'évaluation, la commande (330) commandant le taux d'échantillonnage du capteur de champ magnétique en fonction d'une intensité de champ magnétique lue et le champ magnétique étant lu avec un premier taux d'échantillonnage si ladite intensité devient supérieure à une valeur de seuil prédéterminée et avec un second taux d'échantillonnage inférieur si ladite intensité devient inférieure à la valeur de seuil prédéterminée.

12. Système comprenant une balle de jeu selon l'une des revendications 2 à 9 ainsi qu'un but, des bobines destinées à la production de champs magnétiques étant installées sur le but en vue de la détection du passage de la balle de jeu (100) au-delà d'une ligne de but, les valeurs de champ magnétique desdites bobines étant lues dans le capteur de champ magnétique (300) installé dans la balle de jeu et retransmises par l'émetteur radio (360) à un dispositif central d'évaluation, la commande (330) commandant le taux d'échantillonnage du capteur de champ magnétique en fonction d'une intensité de signal radio reçu par un récepteur radio (420) et le champ magnétique étant lu avec un premier taux d'échantillonnage si ladite intensité devient supérieure à une valeur de seuil prédéterminée et avec un second taux d'échantillonnage inférieur si ladite intensité devient inférieure à la valeur de seuil prédéterminée.

13. Programme informatique avec un code de programme conçu pour la mise en oeuvre d'un procédé selon la revendication 10, lorsque le programme est exécuté sur un ordinateur.

FIGUR 1

```
┌ ─ ─ ─ ─ ─ ─ ─ ─ ┐
│   MESSEN EINES  │
│  MAGNETFELDES MIT├──── S180
│  MAGNETFELDSENSOR│
└ ─ ─ ─ ─ ─ ─ ─ ─ ┘
```

```
┌ ─ ─ ─ ─ ─ ─ ─ ─ ┐
│ AUSLESEN VON MESS-│
│  WERTEN AUS DEM  ├──── S190
│  MAGNETFELDSENSOR │
│    MIT LESER      │
└ ─ ─ ─ ─ ─ ─ ─ ─ ┘
```

```
┌─────────────────┐
│ ERFASSEN EINES BALL-│
│ AKTIVIERUNGSSIGNALS ├──── S200
└─────────────────┘
```

```
┌─────────────────┐
│ STEUERN DES LESERS │
│ MIT UNTERSCHIEDLICHEN├──── S210
│    ABTASTRATEN     │
└─────────────────┘
```

FIGUR 2

11

FIGUR 3

320

|H| 410

400

AKTIVIERUNGSSIGNAL-
ERFASSER

FIGUR 4A

320

420

AKTIVIERUNGSSIGNAL-
ERFASSER

FIGUR 4B

EP 1 976 601 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6151563 A